# EUROPEAN PATENT SPECIFICATION

(11) **EP 4 269 243 B1**
(45) Date of publication and mention of the grant of the patent: **29.04.2026**
(21) Application number: 21914962.2
(22) Date of filing: 11.10.2021
(51) Int. Cl.: B64D 13/08, F25B 1/00, B60H 1/32

(54) **COOLING SYSTEM FOR MOBILE BODY, MOBILE BODY WITH COOLING SYSTEM, AND COOLING CONTROL METHOD**
KÜHLSYSTEM FÜR MOBILEN KÖRPER, MOBILER KÖRPER MIT KÜHLSYSTEM UND KÜHLSTEUERUNGSVERFAHREN
SYSTÈME DE REFROIDISSEMENT POUR CORPS MOBILE, CORPS MOBILE À SYSTÈME DE REFROIDISSEMENT ET PROCÉDÉ DE COMMANDE DE REFROIDISSEMENT

(30) Priority: 28.12.2020 JP 2020218868
(43) Date of publication of application: 01.11.2023
(73) Proprietor: KAWASAKI JUKOGYO KABUSHIKI KAISHA, Kobe-shi, Hyogo 650-8670 (JP)
(72) Inventor: ASAI, Nobuhiro, Kobe-shi, Hyogo 650-8670 (JP); KOGA, Hiroyuki, Kobe-shi, Hyogo 650-8670 (JP); HAKAMADA, Kazuhide, Kobe-shi, Hyogo 650-8670 (JP)
(74) Representative: Kilian Kilian & Partner mbB
(86) International application number: PCT/JP2021/037566
(87) International publication number: WO 2022/145101

(56) References cited:
- JP-A- 2001 026 214
- JP-A- 2003 294 296
- JP-A- 2019 148 420
- JP-A- 2019 148 420
- JP-A- H08 247 561
- JP-A- H08 247 561
- US-A1- 2016 320 111
- US-A1- 2018 149 396

## Description

### TECHNICAL FIELD

The present disclosure relates to technology for cooling the interior of a moving vehicle.

### BACKGROUND ART

Patent Document 1 discloses an air conditioning apparatus for a vehicle that determines a sub-cool degree of a refrigerant at a refrigerant inlet of an expansion valve and, when determining that the refrigerant is not sub-cooled, giving priority to operation to increase a quantity of air delivered by a cooling fan to a heat exchanger external to the vehicle over operation to increase a quantity of discharge from an electrically driven compressor. Patent Document 1 also discloses that a decrease in high side refrigerant pressure of a refrigerating cycle apparatus leads to suppression of a maximum rotation rate of the cooling fan.

### PRIOR ART DOCUMENTS

### PATENT DOCUMENT

Patent Document 1: Japanese Patent Application Laid-Open No. 2013-154753
Patent Document 2: Japanese Patent Application Laid-Open No. JP 2019 148420 A
Patent Document 3: Japanese Patent Application Laid-Open No. JP HOS 247561 A
Patent Document 4: U.S. Patent Application Publication No. US 2018/149396 A1
Patent Document 5: U.S. Patent Application Publication No. US 2016/320111 A1

Patent Document D1 discloses an air conditioner for vehicle having a subcool detection unit of the refrigerant in a coolant inlet port side of an expansion valve and an air conditioning control apparatus permitting to reduce the refrigerant passage sound by increasing the flow of a cooling fan when the refrigerant is not provided in the subcool state at the coolant inlet port side. Patent document D4 discloses a refrigeration cycle device including a charged-amount determination unit that executes a charged-amount determination to determine whether the refrigeration cycle device is in a refrigerant shortage state or not, a compressor control unit that controls a compressor, and a decompression control unit that controls a throttle opening degree of a decompression device. The charged-amount determination unit determines that the refrigeration cycle device is in the refrigerant shortage state when a heat dissipation capacity of a radiator shows a tendency to decrease in a case where the decompression control unit decreases a throttle opening degree of the decompression device while the compressor control unit operates the compressor.

### SUMMARY

### PROBLEM TO BE SOLVED BY THE INVENTION

In technology disclosed in Patent Document 1, however, the maximum rotation rate of the cooling fan is suppressed to be low depending on the high side refrigerant pressure, so that the refrigerant might not be sub-cooled. Furthermore, the refrigerant is not guaranteed to be in a gas phase at a temperature higher than an external air temperature before the heat exchanger external to the vehicle. In these cases, an efficient and stable cooling cycle might not be established without making best use of a latent heat region at the heat exchanger external to the vehicle.

It is thus an object of the present disclosure to enable establishment of an efficient and stable cooling cycle when the interior of a moving vehicle is cooled.

### SUMMARY OF THE INVENTION

The claimed invention proposes a cooling system according to claim 1 and a cooling control method according to claim 11. Preferred cooling system according to claim 1 are claimed in the dependent claims 2-10 and preferred method according to claim 11 are claimed in the dependent claims 12-14.

### MEANS TO SOLVE THE PROBLEM

According to the cooling system for the moving vehicle, the first processing to regulate the flow rate of the cooling fluid using the flow rate regulation device so that the pressure of the refrigerant at the condenser is higher than the saturation pressure of the refrigerant at the environmental temperature and the second processing to regulate the opening of the expansion valve so that the refrigerant downstream of the condenser is sub-cooled are performed. An efficient and stable cooling cycle can thus be established by using a latent heat region at the condenser.

According to the cooling control method, the first processing to regulate the flow rate of the cooling fluid directed to the condenser so that the pressure of the refrigerant at the condenser is higher than the saturation pressure of the refrigerant at the environmental temperature and the second processing to regulate the opening of the expansion valve so that the refrigerant downstream of the condenser is sub-cooled are performed. The efficient and stable cooling cycle can thus be established by using the latent heat region at the condenser.

### EFFECTS OF THE INVENTION

An efficient and stable cooling cycle can be established when the interior of a moving vehicle is cooled.

### BRIEF DESCRIPTION OF DRAWINGS

FIG. 1 is a schematic diagram illustrating a moving vehicle with a cooling system according to an embodiment.
FIG. 2 is a block diagram showing the cooling system.
FIG. 3 is a flowchart showing one example of processing performed by a controller.
FIG. 4 is a diagram showing a data flow in the system.
FIG. 5 is a pressure specific enthalpy diagram in the system.
FIG. 6 is a block diagram showing a cooling system for a moving vehicle according to a modification.
FIG. 7 is a flowchart showing one example of fourth processing performed by a controller according to the modification.
FIG. 8 is a schematic diagram illustrating a moving vehicle with a cooling system according to a modification.
FIG. 9 is a schematic diagram illustrating another moving vehicle with a cooling system according to a modification.

### DESCRIPTION OF EMBODIMENT

A cooling system for a moving vehicle, a moving vehicle with a cooling system, and a cooling control method according to an embodiment will be described below.

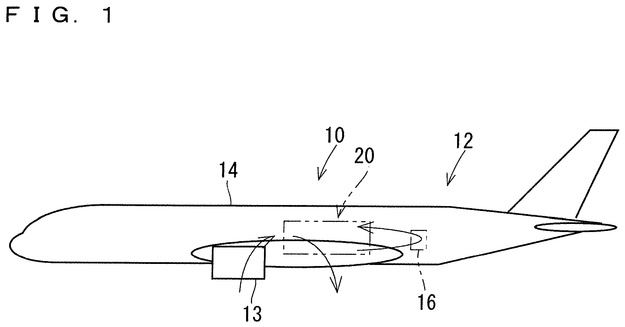

FIG. 1 is a schematic diagram illustrating a moving vehicle with a cooling system 10 including a cooling system for a moving vehicle 20 and a moving vehicle 12.

The moving vehicle 12 is an apparatus that moves through a space. The moving vehicle 12 includes a propulsion apparatus 13 and a main body 14 in which the propulsion apparatus 13 is incorporated. The propulsion apparatus 13 is an apparatus that creates propulsive force for movement. The main body 14 includes an outer shell that separates internal rooms, such as an equipment room, a cargo room, and a cabin, from an outside. The propulsion apparatus 13 is mounted to the main body 14, and the moving vehicle 12 can move through the space by the propulsive force created by the propulsion apparatus 13. The space targeted for movement may be an aboveground space, an atmospheric space, an underwater space, and the like.

In the present embodiment, description will be made mainly on a case where the moving vehicle 12 is an aircraft 12 as illustrated in FIG. 1. In the present embodiment, the main body 14 is an airframe including a fuselage, wings, a tail, and the like. Even in a case of the aircraft, variations of the main body, including the main body without the tail and the main body with no boundary between the fuselage and the wings, are envisioned. The propulsion apparatus 13 is a jet engine, a propeller rotated by a prime mover, a propulsion apparatus that utilizes a motor, and the like. The propulsion apparatus 13 may be mounted to the wings. In addition to the aircraft 12, the moving vehicle 12 may include an underwater propulsion vehicle, a railroad vehicle (e.g., a railroad vehicle that travels at a high speed of 400 km/h or more, for example, such as a magnetically levitated railroad), and the like.

The cooling system 20 is incorporated in the aircraft 12. The cooling system 20 is a kind of a vapor cycle system (VCS). **In** the aircraft 12, an external air flow path is formed along which external air A1 is taken into the main body 14, and, after heat exchange with the cooling system 20, is exhausted to the outside. The external air A1 is one example of a cooling fluid for releasing heat of the cooling system 20 to a fluid different from a fluid subjected to a cooling target in the airframe. The external air A1 may be taken into the main body 14 via the fuselage, the wings, the jet engine, and the like. The cooling system 20 can thus exhaust heat to the outside. An apparatus 16 to be cooled is disposed in the main body 14. **In** the aircraft 12, an internal air flow path is formed along which, after internal cooling air A2 cooled by the cooling system 20 is directed toward the apparatus 16 and is then returned to the cooling system 20 for cooling, the internal cooling air A2 is returned to the apparatus 16. The apparatus 16 is cooled by being subjected to the internal cooling air A2.

The cooling fluid can be a fluid other than air, such as a liquid. For example, as will be described in a modification below, it is contemplated that the moving vehicle can be an underwater propulsion vehicle that is propelled underwater, and the cooling system 20 can be cooled using a liquid external to the underwater propulsion vehicle. The fluid subjected to the cooling target in the airframe can be a fluid other than air, such as a liquid. For example, it is contemplated that the cooling target in the airframe can be cooled using a cooling liquid cooled by an evaporator 28.

The apparatus 16 may be a control apparatus, such as a computer, a power supply apparatus, such as a battery and a power supply circuit, and a mechanical apparatus. The cooling target may not be the apparatus 16, and may be cargos in the cargo room and air in the cabin.

An environment external to the aircraft 12 varies greatly depending on an aircraft speed and an altitude. The cooling system 20 takes in external air for heat exchange at a condenser. The great variation of the external environment can thus have a major effect on heat exchange performance of the cooling system 20. The cooling system 20 according to the present embodiment relates to technology for enabling establishment of an efficient and stable cooling cycle regardless of the great variation of the external environment.

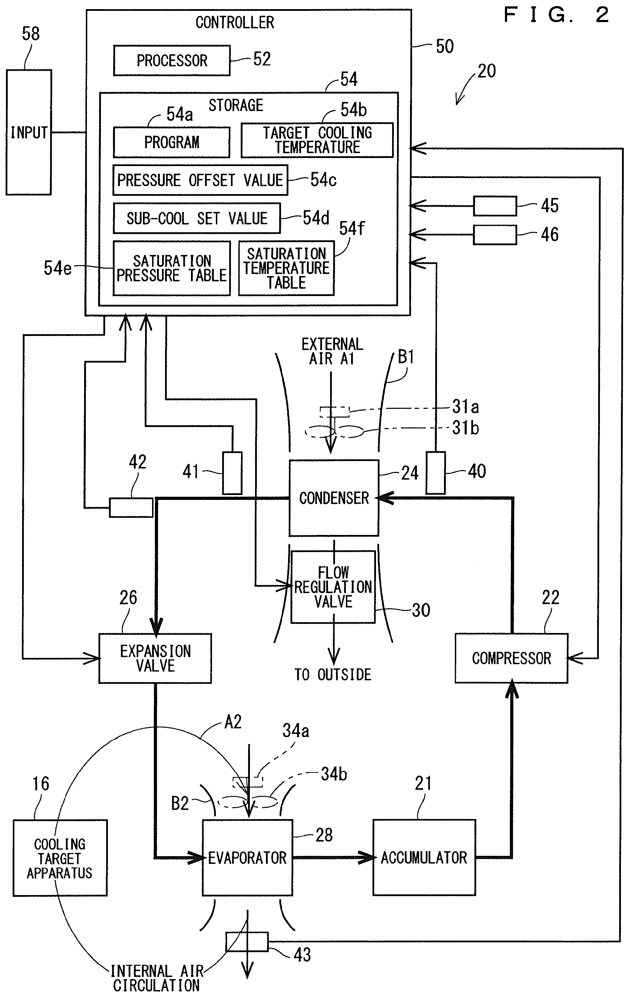

FIG. 2 is a block diagram showing the cooling system 20.

When a configuration relating to a cycle in which a refrigerant circulates will mainly be described first, the cooling system 20 includes a compressor 22, a condenser 24, an expansion valve 26, and the evaporator 28.

The compressor 22 draws in the refrigerant evaporated by the evaporator 28, compresses the refrigerant, and delivers the refrigerant to the condenser 24. The compressor 22 includes a motor and a rotor or a blade rotated by driving of the motor, for example, and compresses the refrigerant by rotating the rotor or the blade by driving of the motor. Refrigerant compression capacity of the compressor 22 is controlled by controlling a rotation speed of the motor. For example, as the rotation speed of the motor increases, a compression ratio increases, and the refrigerant is compressed to higher pressure. The compressor 22 is only required to be able to compress the refrigerant, and may be a centrifugal compressor or may be a positive displacement compressor. A refrigerant circulation quantity in the cycle depends on discharge pressure and a discharge flow rate of the compressor 22, and the discharge pressure and the discharge flow rate are determined by a rotation rate of the compressor 22. By opening and closing the expansion valve 26, which will be described below, a flow rate of the refrigerant is changed within performance at the rotation rate of the compressor 22.

The condenser 24 condenses the refrigerant delivered from the compressor 22 for liquefaction. The liquefied refrigerant is delivered to the expansion valve by driving force of circulation by the compressor 22. The condenser 24 is herein subjected to the external air A1 taken into the moving vehicle 12 along the external air flow path B1. Heat is thus exchanged between the refrigerant in the condenser 24 and the external air A1, the refrigerant is condensed and liquefied, and the external air A1 is heated and released to the outside. A quantity of heat exchange at the condenser 24 increases with increasing quantity of the external air A1 passing through the condenser 24. The quantity of heat exchange at the condenser 24 also increases with decreasing temperature of the external air A1. The temperature of the external air A1 depends on the external environment, and, as it is difficult to control the temperature of the external air A1 itself, the quantity of heat exchange at the condenser 24 is only required to be regulated by regulating a flow rate of the external air A1 passing through the condenser 24. For example, a flow regulation valve 30 may be disposed along the external air flow path B1. The flow regulation valve 30 is a valve that regulates a flow of the external air A1 along the external air flow path B1 to regulate the flow rate of the external air A1 directed to the condenser 24. The flow regulation valve 30 may be a device, such as a butterfly valve and a damper, that regulates the flow or the flow rate of the external air A1 by moving a valve or a blade using a drive, such as a solenoid and a motor. In addition to or in place of the flow regulation valve 30, a motor 31a and a fan 31b to increase a quantity of air along the external air flow path B1 may be arranged. The flow regulation valve 30, the motor 31a, and the fan 31b may be arranged upstream or downstream of the condenser 24 along the flow of the external air A1. The flow regulation valve 30, the motor 31a, and the fan 31b are examples of a flow rate regulation device that regulates the flow rate when cooling air depending on the environment external to the moving vehicle 12 is directed to the condenser 24. An example in which the flow rate of the external air A1 as the cooling air is regulated by commanding opening of the flow regulation valve 30 will mainly be described below.

The expansion valve 26 expands the refrigerant delivered from the condenser 24. The expanded refrigerant is delivered to the evaporator 28 by the driving force of circulation by the compressor 22. The expansion valve 26 is configured so that opening can be regulated. For example, the expansion valve 26 may be configured so that the opening is regulated by moving a valve body by driving of a drive, such as a stepping motor. As the opening of the expansion valve 26 increases, pressure of the refrigerant at the condenser 24 decreases and pressure of the refrigerant at the evaporator increases, and an expansion ratio decreases. In contrast, as the opening of the expansion valve decreases, pressure of the refrigerant at the condenser 24 increases and pressure of the refrigerant at the evaporator decreases, and the expansion ratio increases.

The evaporator 28 evaporates the refrigerant expanded by the expansion valve 26 to cool air in the moving vehicle 12. That is to say, the internal cooling air A2 along an internal air flow path B2 in the moving vehicle 12 circulates through a space around the apparatus 16 to be cooled and a space around the evaporator 28. The evaporator 28 is subjected to the internal cooling air A2, so that heat is exchanged between the refrigerant in the evaporator 28 and the internal cooling air A2, and the internal cooling air A2 is cooled and the refrigerant is heated and evaporated. A quantity of heat exchange at the evaporator 28 increases with increasing quantity of the internal cooling air A2 passing through the evaporator 28. The quantity of heat exchange at the evaporator 28 also increases with increasing temperature of the internal cooling air A2. The temperature of the internal cooling air A2 mainly depends on the temperature of the apparatus 16, and thus the quantity of heat exchange at the evaporator 28 may be regulated by regulating a flow rate of the internal cooling air A2 passing through the evaporator 28. For example, a motor 34a and a fan 34b to increase a speed of air or a quantity of air may be arranged along the internal air flow path B2. A flow regulation valve may be disposed in addition to or in place of the motor 34a and the fan 34b. The flow regulation valve, the motor 34a, and the fan 34b may be arranged upstream or downstream of the condenser 24 along the flow of the external air A1.

The compressor 22, the condenser 24, the expansion valve 26, and the evaporator 28 described above are connected via piping so that the refrigerant circulates through them in this order.

A gas-liquid separator 21 may be interposed between the evaporator 28 and the compressor 22. The gas-liquid separator 21 is a liquid separator that separates the refrigerant in a liquid phase that cannot be evaporated at the evaporator 28 from the evaporated refrigerant in a gas phase.

The cooling system 20 includes a sensor, which will be described next, to detect a state of the refrigerant at each part. That is to say, a first pressure sensor 40 and a second pressure sensor 41 are arranged as pressure sensors to detect pressure at the condenser 24. At an inlet upstream of the condenser 24, the first pressure sensor 40 to detect pressure of the refrigerant at the inlet is disposed. At an outlet downstream of the condenser 24, the second pressure sensor 41 to detect pressure of the refrigerant at the outlet is disposed. The number of sensors to detect pressure at the condenser 24 may be one. For example, only one of the first pressure sensor 40 and the second pressure sensor 41 may be disposed. When the first pressure sensor 40 and the second pressure sensor 41 are arranged upstream and downstream of the condenser 24, respectively, cooling processing in view of a pressure loss at the condenser 24 can be performed. Furthermore, a temperature sensor 42 that detects a temperature of the refrigerant downstream of the condenser 24 is disposed on piping downstream of the condenser 24.

The cooling system 20 further includes a cooling temperature detection sensor 43 that detects a cooling temperature at the evaporator 28. The cooling temperature is a temperature at which cooling can be performed using the internal cooling air A2 cooled by the evaporator 28. The cooling temperature detection sensor 43 is disposed downstream of the evaporator 28 along a flow of the internal cooling air A2, for example, and is located to detect a temperature at which cooling is performed by the evaporator 28.

The cooling system 20 also includes environmental temperature acquisition sensors 45 and 46 to acquire an environmental temperature. The environmental temperature is an environmental temperature to which the condenser 24 is subjected by the cooling air A1. When the environmental temperature on a surface of the moving vehicle 12 is affected by at least one of a speed of movement and/or a height (may be either the altitude or a depth) associated with movement of the moving vehicle 12, the environmental temperature may be grasped as a temperature depending on the external environment in view of at least one of movement (the speed) and/or the height (may be either the altitude or the depth) of the moving vehicle 12.

When the moving vehicle 12 is the aircraft 12, the environmental temperature is a total temperature (an external air total temperature) for the aircraft 12. The total temperature is a temperature acquired by adding a dynamic temperature corresponding to kinetic energy to a static temperature, and is a temperature affected by both the speed and the altitude of the aircraft 12. The cooling air A1 is the external air A1 directed from outside the aircraft 12 to the cooling system 20, and thus has a temperature in accordance with the total temperature for the aircraft 12. More specifically, the total temperature is a temperature of a fluid (herein air) on an outer surface of the aircraft 12, and is also referred to as a stagnation temperature. For example, the total temperature can be calculated from the speed, the altitude, and the like of the aircraft. An aircraft speed sensor and an altimeter may thus be arranged as the environmental temperature acquisition sensors 45 and 46 to derive the total temperature as the environmental temperature based on outputs
from the environmental temperature acquisition sensors 45 and 46. A temperature sensor that detects a temperature outside the aircraft 12 may be disposed, and the total temperature may be acquired based on an output from the temperature sensor. An external environmental temperature may be a temperature acquired by directly measuring the external air A1 flowing into the cooling system 20.

A configuration relating to control of the cooling system 20 will be described. The cooling system 20 includes a controller 50 that controls each part.

The controller 50 is configured by a computer that includes a processor 52, such as a central processing unit (CPU), a storage 54, and the like. An input 58, such as a keyboard and a touch panel, to input various commands, set values, and the like may be connected to the controller 50. The processor 52 is configured by an electric circuit, and performs arithmetic processing according to procedures already written in a program 54a stored in the storage 54 to perform various types of processing below to control driving of the compressor 22, the flow regulation valve 30, the expansion valve 26, and the like. The processor 52 may be configured by a single processor, or may be configured by processors. The storage 54 is configured by a nonvolatile storage device, such as a hard disk drive (HDD) and a solid-state drive (SSD). The program 54a, a target cooling temperature 54b, a pressure offset value 54c, a sub-cool set value 54d, a saturation pressure table 54e, a saturation temperature table 54f, and the like are stored in the storage 54. The program 54a is a program to cause the controller 50 as the computer to perform processing relating to the system 20. The program can be distributed by being recorded on a portable recording medium, or provided through a communication medium, such as a communication network. The target cooling temperature 54b is a target temperature to cool the internal cooling air A2 using the evaporator 28. Driving of the compressor 22 is controlled so that a detected temperature of the internal cooling air A2 based on an output from the temperature sensor 42 is the target temperature. The saturation pressure table 54e is a table in which saturation pressure is associated with the temperature of the refrigerant, and saturation pressure of the refrigerant corresponding to the total temperature is acquired with reference to the derived total temperature and the saturation pressure table 54e. The pressure offset value 54c is a target value by which inlet pressure of the condenser 24 is offset from the saturation pressure corresponding to the total temperature. Driving of the flow regulation valve 30 is controlled so that detected pressure based on an output from the first pressure sensor 40 is a target value acquired by offsetting the saturation pressure corresponding to the total temperature by the above-mentioned pressure offset value 54c. The saturation temperature table 54f is a table in which a saturation temperature is associated with the pressure of the refrigerant, and a saturation temperature of the refrigerant corresponding to the detected pressure is acquired based on pressure based on an output from the second pressure sensor 41 and the saturation temperature table 54f. The sub-cool set value 54d is a target sub-cool at the outlet of the condenser 24. A sub-cool is acquired from a difference between the saturation temperature corresponding to the detected pressure based on the output from the second pressure sensor 41 and a detected temperature based on the output from the temperature sensor 42, and the opening of the expansion valve 26 is controlled so that the sub-cool is the sub-cool set value 54d. The pressure offset value 54c and the sub-cool set value 54d may be values set speculatively, experimentally, and empirically.

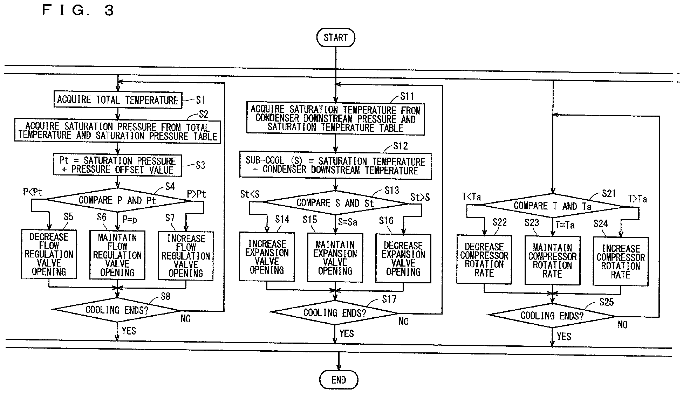

FIG. 3 is a flowchart showing one example of processing performed by the controller 50.

Steps S1 to S8 indicate first processing, steps S11 to S17 indicate second processing, and steps S21 to S25 indicate third processing. In the present embodiment, an example in which the controller 50 physically configured as a single computer performs the first processing and the second processing, and further performs the third processing will be shown. Being physically configured as a single computer refers to being configured as a device that can be handled as a single device. The processor 52 in the controller 50 may thus be configured as a so-called multicore CPU. The first processing, the second processing, and the third processing may be performed in parallel. Parallel processing herein includes not only a case where core processors incorporated in the processor 52 separately perform processing but also a case where one or more core processors perform pseudo parallel processing. The first processing, the second processing, and the third processing may naturally physically be performed by discrete computers.

The first processing is processing to regulate, based on the total temperature as the environmental temperature based on the outputs from the environmental temperature acquisition sensors 45 and 46 and the output from the first pressure sensor 40, the flow rate using the flow regulation valve 30 as one example of the flow rate regulation device so that the pressure of the refrigerant at the condenser 24 is higher than the saturation pressure of the refrigerant at the environmental temperature.

That is to say, the total temperature is acquired in step S1. As described above, the total temperature is acquired from the aircraft speed sensor, the altimeter, and the like of the aircraft as the environmental temperature acquisition sensors 45 and 46, for example.

In next step S2, based on the total temperature acquired in step S1, the saturation pressure corresponding to the acquired total temperature is acquired with reference to the saturation pressure table 54e.

In next step S3, the pressure offset value 54c is added to the saturation pressure corresponding to the total temperature acquired in step S2 to acquire target pressure Pt. The pressure offset value 54c may be any value equal to or greater than zero.

In next step S4, detected pressure P based on the output from the first pressure sensor 40 and the above-mentioned target pressure Pt are compared. When the detected pressure P is lower than the target pressure Pt, processing proceeds to step S5 to decrease the opening of the flow regulation valve 30. The quantity of heat exchange of the refrigerant at the condenser 24 is thus decreased, and the detected pressure P increases to be closer to the target pressure Pt. When the detected pressure P is the same as the target pressure Pt, processing proceeds to step S6 to maintain the opening of the flow regulation valve 30. A state in which the detected pressure P and the target pressure Pt are the same is thus maintained. When the detected pressure P is higher than the target pressure Pt, processing proceeds to step S7 to increase the opening of the flow regulation valve 30. The quantity of heat exchange of the refrigerant at the condenser 24 is thus increased, and the detected pressure P decreases to be closer to the target pressure Pt.

In steps S4 to S7, processing to cause the pressure of the refrigerant at the inlet of the condenser 24 to be equal to or higher than the saturation pressure corresponding to the total temperature to put the refrigerant at the inlet in the gas phase is performed. The temperature of the refrigerant at the inlet is herein equal to or higher than the total temperature of the external air A1. That is to say, steps S4 to S7 are one example of processing to compare the above-mentioned saturation pressure and the above-mentioned pressure of the refrigerant, and regulate, based on a result of comparison, the flow rate using the flow rate regulation device so that the refrigerant upstream of the condenser 24 is in the gas phase at a temperature equal to or higher than the total temperature of the external air A1.

After steps S5, S6, and S7, processing proceeds to step S8. In step S8, whether cooling ends, for example, whether there is a power supply on-off command of the system 20 is determined. For example, when it is determined that cooling is continued without ending based on a power supply on-off signal based on operation of a power supply switch and the like, processing returns to step S1 to repeat the subsequent processing. When it is determined that cooling ends, the first processing ends.

The second processing is processing to regulate, based on the output from the second pressure sensor 41 and the output from the temperature sensor 42, the opening of the expansion valve 26 so that the refrigerant downstream of the condenser 24 is sub-cooled.

That is to say, in step S11, based on the pressure of the refrigerant downstream of the condenser 24 based on the output from the second pressure sensor 41 and the saturation temperature table 54f, the saturation temperature at the pressure of the refrigerant is acquired.

In next step S12, the temperature of the refrigerant downstream of the condenser 24 based on the output from the temperature sensor 42 is subtracted from the saturation temperature acquired in step S11 to acquire a sub-cool S.

In next step S13, a sub-cool target value St defined as the sub-cool set value 54d and the sub-cool S are compared. The sub-cool target value St may be any value indicating establishment of sub-cooling. When the sub-cool S is higher than the sub-cool target value St, processing proceeds to step S14 to increase the opening of the expansion valve 26. The flow rate at the condenser 24 is thus increased. If the temperature and the flow rate of the external air A1 and the temperature of the refrigerant in the condenser 24 are herein constant, the quantity of heat exchange at the condenser 24 is constant, and, when the flow rate at the condenser 24 increases under this condition, a condenser downstream temperature increases by the increase. The sub-cool S thus decreases to be closer to the sub-cool target value St. When the sub-cool S is the same as the sub-cool target value St, processing proceeds to step S15 to maintain the opening of the expansion valve 26. A state in which the sub-cool S and the sub-cool target value St are the same is thus maintained. When the sub-cool S is lower than the sub-cool target value St, processing proceeds to step S16 to decrease the opening of the expansion valve 26. The flow rate at the condenser 24 is thus decreased. Similarly to the foregoing, the condenser downstream temperature thus decreases by the decrease in flow rate at the condenser 24 under the condition where the quantity of heat exchange is constant, and the sub-cool S increases to be closer to the sub-cool target value St.

In steps S13 to S16, processing to cause the sub-cool S at the outlet of the condenser 24 to be the sub-cool target value St, that is, to put a state in a sub-cool state is performed. That is to say, steps S13 to S16 are one example of processing to compare the above-mentioned saturation temperature and the above-mentioned temperature of the refrigerant, and regulate, based on a result of comparison, the opening of the expansion valve 26 so that the refrigerant downstream of the condenser 24 is sub-cooled.

After steps S14, S15, and S16, processing proceeds to step S17. In step S17, whether cooling ends, for example, whether there is the power supply on-off command of the system 20 is determined. When it is determined that cooling is continued without ending, processing returns to step S11 to repeat the subsequent processing. When it is determined that cooling ends, the second processing ends.

The third processing is processing to control the compressor 22 based on the cooling temperature based on the output from the cooling temperature detection sensor 43 and the target cooling temperature 54b.

That is to say, in step S21, a cooling temperature T based on the output from the cooling temperature detection sensor 43, that is, a temperature T of the internal cooling air A2 downstream of the evaporator 28 and the target cooling temperature Ta defined by the target cooling temperature 54b are compared. When the temperature T is lower than the target cooling temperature Ta, processing proceeds to step S22 to decrease the rotation rate of the compressor 22. The compression ratio of the refrigerant before and after the compressor 22 thus decreases, the pressure of the refrigerant in the evaporator 28 increases, and the temperature of the refrigerant increases. A temperature difference between the internal cooling air A2 and the refrigerant in the evaporator 28 thus decreases, the quantity of heat exchange decreases, and the temperature T increases to be closer to the target cooling temperature Ta. The decrease in rotation rate of the compressor 22 also has an effect of increasing the temperature T as a flow rate of circulation of the refrigerant decreases to decrease the quantity of heat exchange at the evaporator 28. When the temperature T is the same as the target cooling temperature Ta, processing proceeds to step S23 to maintain the rotation rate of the compressor 22. A state in which the temperature T and the target cooling temperature Ta are the same is thus maintained. When the temperature T is higher than the target cooling temperature Ta, processing proceeds to step S24 to increase the rotation rate of the compressor 22. The compression ratio of the refrigerant before and after the compressor 22 thus increases, the pressure of the refrigerant in the evaporator 28 decreases, and the temperature of the refrigerant decreases. The temperature difference between the internal cooling air A2 and the refrigerant in the evaporator 28 thus increases, and cooling capacity of the system 20 increases. The temperature T thus decreases to be closer to the target cooling temperature Ta. The increase in rotation rate of the compressor 22 also has an effect of decreasing the temperature T as the flow rate of circulation increases to increase the quantity of heat exchange at the evaporator 28.

Steps S21 to S24 are one example of processing to regulate the rotation rate of the compressor 22 so that the temperature T of the internal cooling air A2 downstream of the evaporator 28, that it, the cooling temperature T is closer to the target cooling temperature Ta.

After steps S22, S23, and S24, processing proceeds to step S25. In step S25, whether cooling is continued, for example, whether there is the power supply on-off command of the system 20 is determined. When it is determined that cooling is continued without ending, processing returns to step S21 to repeat the subsequent processing. When it is determined that cooling ends, the third processing ends.

When it is determined that cooling ends in steps S8, S17, and S25, processing in the system 20 ends.

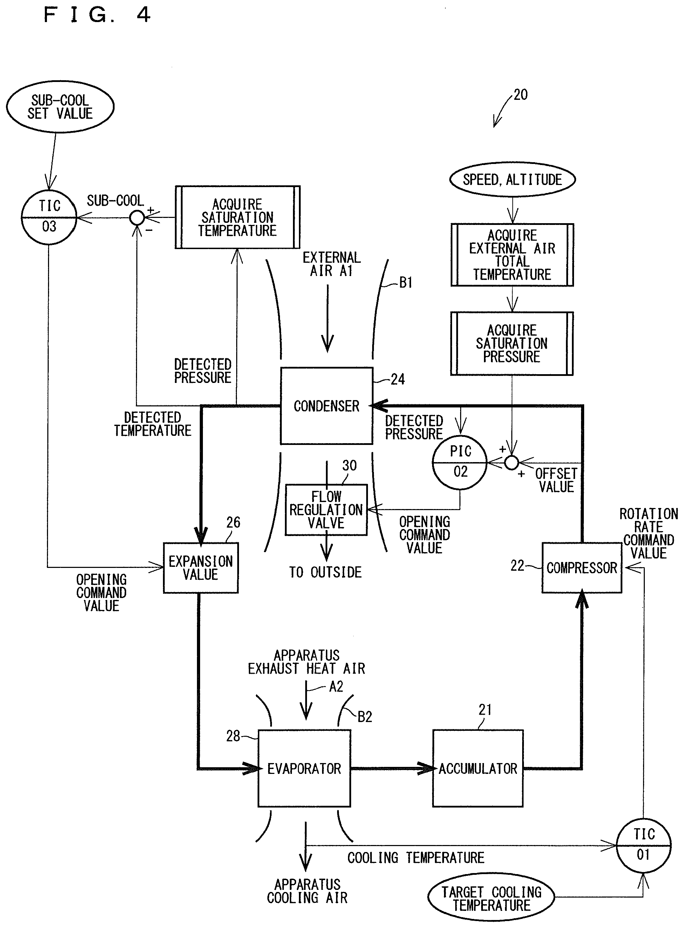

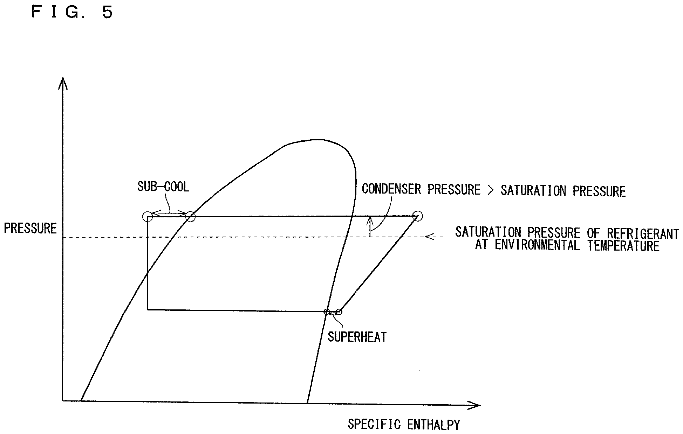

FIG. 4 is a diagram showing a data flow in the system 20, and FIG. 5 is a pressure specific enthalpy diagram in the system 20. A data processing example and a state of the refrigerant at each part will be described with reference to these diagrams.

The refrigerant compressed by the compressor 22 is delivered to the condenser 24. In this case, the above-mentioned first processing is performed. That is to say, the external air total temperature is acquired based on the aircraft speed, the altitude, and the like of the aircraft 12, and the saturation pressure is acquired based on the external air total temperature and the saturation pressure table 54e. A value acquired by adding the offset value to the saturation pressure and a value of the pressure of the refrigerant at the inlet of the condenser 24 are provided to a controller (PIC02) implemented by processing functionality of the controller 50, and the controller (PIC02) provides a value commanding the opening of the flow regulation valve 30 to the flow regulation valve 30 based on the value acquired by addition and the value of the pressure of the refrigerant. By regulating the opening of the flow regulation valve 30, the quantity of heat exchange at the condenser 24 using the external air A1 is regulated so that the pressure of the refrigerant at the inlet of the condenser 24 is higher than the saturation pressure corresponding to the total temperature as the cooling temperature of the external air A1. The flow rate regulation device is thus controlled so that the refrigerant is in the gas phase at the temperature equal to or higher than the total temperature of the external air A1 at the inlet of the condenser 24.

After heat is exchanged between the refrigerant and the external air A1 at the condenser 24, the refrigerant is delivered to the expansion valve 26. Since the refrigerant is in the gas phase at the temperature equal to or higher than the total temperature of the external air A1 at the inlet of the condenser 24 as described above, heat of the refrigerant is more reliably exhausted to the external air A1 at the condenser 24. When the refrigerant flows downstream of the condenser 24, the above-mentioned second processing is performed. That is to say, the saturation temperature is acquired based on the pressure of the refrigerant at the outlet of the condenser 24 and the saturation temperature table. The sub-cool acquired by subtracting the temperature of the refrigerant downstream of the condenser 24 from the saturation temperature is provided to a controller (TIC03) implemented by the processing functionality of the controller 50. The controller (TIC03) provides a value commanding the opening of the expansion valve 26 to the expansion valve 26 based on the sub-cool and the sub-cool set value. By regulating the opening of the expansion valve 26, the pressure at the condenser 24 is regulated to regulate a degree of expansion of the refrigerant at the expansion valve 26 so that a desired sub-cool state in accordance with the sub-cool set value is established at the outlet of the condenser 24.

The refrigerant is expanded by the expansion valve 26. The refrigerant with decreased pressure is thus delivered to the evaporator 28. Heat is exchanged between the refrigerant and the internal cooling air A2 at the evaporator 28, and the refrigerant is put in the gas phase. The refrigerant may be superheated at the outlet of the evaporator 28. An example of processing to more reliably heat the refrigerant will be described in a modification below.

The refrigerant is delivered from the evaporator 28 to the compressor 22 through the gas-liquid separator 21. After being compressed by the compressor 22, the refrigerant is delivered to the condenser 24 again. The above-mentioned third processing is performed when the refrigerant is delivered from the evaporator 28 to the compressor 22. That is to say, the cooling temperature of the internal cooling air A2 cooled through the evaporator 28 and the target cooling temperature are provided to a controller (TIC01) implemented by the processing functionality. The controller (TIC01) provides a value commanding the rotation rate of the compressor 22 to the compressor 22 based on the cooling temperature and the target cooling temperature. As the compression ratio of the compressor 22 increases in response to the value commanding the rotation rate, the cooling capacity of the system 20 increases, and the cooling temperature of the internal cooling air A2 can be decreased. By controlling the rotation rate of the compressor 22 to control the compression ratio thereof, the cooling temperature can be regulated to be the target cooling temperature.

According to the cooling system for the moving vehicle 20, the moving vehicle with the cooling system 10, and the cooling control method configured as described above, the first processing to regulate the flow rate using the flow rate regulation device so that the pressure of the refrigerant at the condenser 24 is higher than the saturation pressure of the refrigerant at the environmental temperature and the second processing to regulate the opening of the expansion valve 26 so that the refrigerant downstream of the condenser 24 is sub-cooled are performed. Thus, the refrigerant upstream of the condenser 24 is in the gas phase at the temperature equal to or higher than the total temperature of the external air A1, and the refrigerant downstream of the condenser 24 is sub-cooled, so that the efficient and stable cooling cycle can be established by using a latent heat region of the refrigerant at the condenser 24. Furthermore, a high coefficient of performance (COP) can be acquired. This is highly beneficial in terms of making best use of performance of the system 20 for a moving vehicle, such as the aircraft, having constraints on facility weight and volume.

The first processing and the second processing described above are controlled independently of a heat exchange action at the evaporator 28, so that an influence on cooling performance with respect to the cooling target can be avoided.

As a specific example, in the first processing, the flow rate can be regulated using the flow rate regulation device so that the pressure of the refrigerant at the condenser 24 is higher than the saturation pressure of the refrigerant at the environmental temperature by comparing the saturation pressure of the refrigerant corresponding to the environmental temperature and the detected pressure of the refrigerant at the condenser 24. Processing to cause the pressure of the refrigerant at the condenser 24 to be higher than the saturation pressure of the refrigerant at the environmental temperature may be grasped as processing to cause the temperature of the refrigerant to be equal to or higher than the total temperature of the external air at the condenser 24, in particular, at the inlet of the condenser 24.

As a specific example, in the second processing, the saturation temperature corresponding to the detected pressure of the refrigerant downstream of the condenser 24 and the detected temperature of the refrigerant downstream of the condenser 24 are compared, and, based on a result thereof, the opening of the expansion valve 26 can be regulated so that the refrigerant downstream of the condenser 24 is sub-cooled.

Furthermore, the controller 50 performs the third processing to control the compressor 22 based on the output from the cooling temperature detection sensor 43 and the target cooling temperature. Dryness at the inlet of the evaporator thus decreases in a cooling cycle, the latent heat region at the evaporator 28 can be increased, and the cooling capacity can be increased. The cooling capacity of the system 20 can thus be regulated in accordance with the target cooling temperature while the efficient and stable cooling cycle is established by the first processing and the second processing described above.

When the external air A1 is taken to cool the condenser 24 in the moving vehicle 12, such as the aircraft 12, the external air A1 has a temperature in accordance with the total temperature. Thus, by using the total temperature as the environmental temperature, the first processing can be performed based on a temperature suitable as a temperature to which the condenser 24 is subjected.

Furthermore, by using a configuration in which the flow rate is regulated using at least one of the flow regulation valve 30 and/or the fan 31b as the flow rate regulation device, the quantity of heat exchange at the condenser 24 can be regulated.

The configuration is simplified by physically implementing the first processing and the second processing using a single computer.

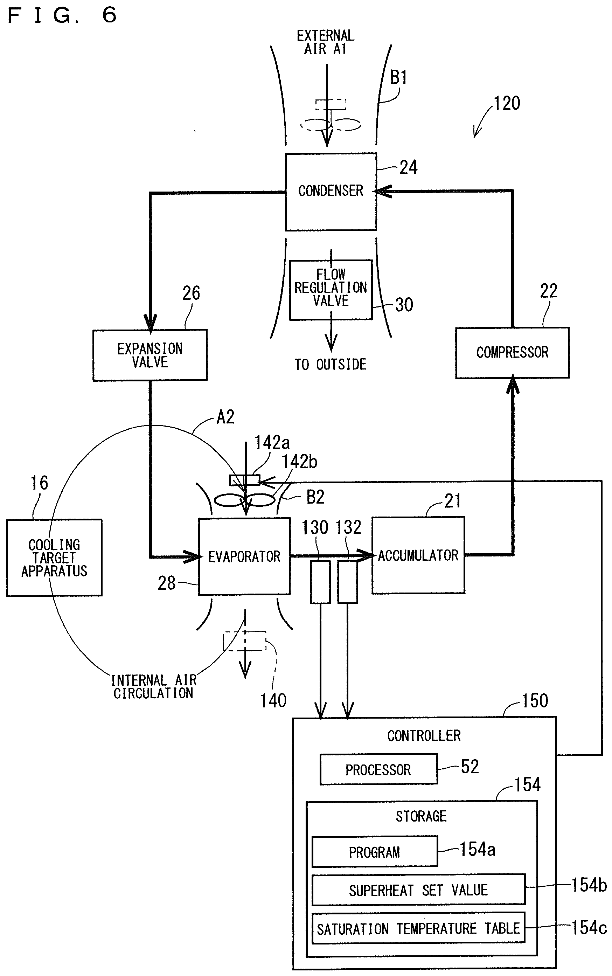

FIG. 6 is a block diagram showing a cooling system for a moving vehicle 120 according to a modification. A portion of the configuration different from that of the system 20 in the above-mentioned embodiment will mainly be described with reference to FIG. 6.

The cooling system for the moving vehicle 120 includes an internal cooling flow rate regulation device that regulates the flow rate of the internal cooling air A2 passing through the evaporator 28. The internal cooling flow rate regulation device may be a fan 142b and a motor 142a arranged along the internal air flow path B2. The motor 142a rotates the fan 142b to regulate the flow rate through the evaporator 28. The fan 142b may be disposed upstream or downstream of the evaporator 28. The internal cooling flow rate regulation device may be a flow regulation valve 140 similar to the above-mentioned flow regulation valve 30.

A third pressure sensor 130 and an evaporator downstream refrigerant temperature sensor 132 are arranged downstream of the evaporator 28. The third pressure sensor 130 is a pressure sensor that detects the pressure of the refrigerant downstream of the evaporator 28. The evaporator downstream refrigerant temperature sensor 132 is a temperature sensor that detects a temperature of the refrigerant downstream of the evaporator 28.

A program 154a is stored in a storage 154 of a controller 150 corresponding to the storage 54 of the above-mentioned controller 50. The program 154a includes processing procedures to perform fourth processing in addition to the processing procedures already written in the program 54a. A superheat set value 154b and a saturation temperature table 154c are stored in the storage 154. The superheat set value 154b is a target superheat at the outlet of the evaporator 28. The saturation temperature table 154c is a table in which the saturation temperature is associated with the pressure of the refrigerant. The saturation temperature of the refrigerant corresponding to the detected pressure is acquired based on detected pressure based on an output from the third pressure sensor 130 and the saturation temperature table 154c. A superheat is acquired based on a difference between the saturation temperature and the detected temperature based on an output from the evaporator downstream refrigerant temperature sensor 132, and a rotation rate of the motor 142a and the fan 142b as the internal cooling flow rate regulation device is controlled so that the superheat is the above-mentioned superheat set value 154b. The superheat set value 154b is only required to be a value indicating a superheat state, and may be a value set speculatively, experimentally, and empirically.

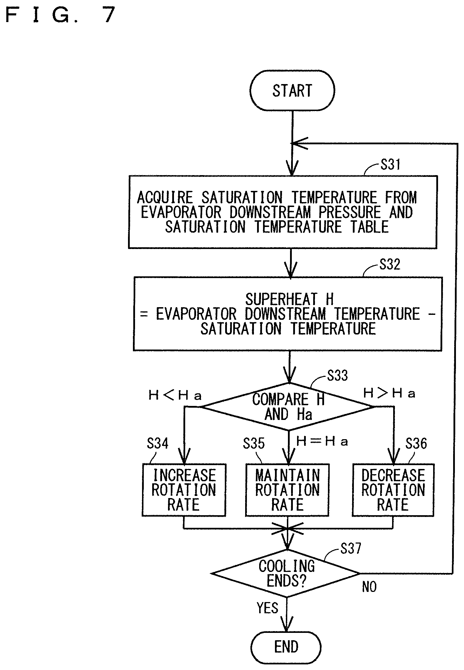

FIG. 7 is a flowchart showing one example of the fourth processing performed by the controller 150. The fourth processing is performed in parallel with the above-mentioned first to third processing.

In step S31, based on the pressure of the refrigerant downstream of the evaporator 28 based on the output from the third pressure sensor 130 and the saturation temperature table 154c, the saturation temperature at the pressure of the refrigerant is acquired.

In next step S32, the above-mentioned saturation temperature is subtracted from the temperature of the refrigerant downstream of the evaporator 28 based on the output from the evaporator downstream refrigerant temperature sensor 132 to acquire a superheat H.

In next step S33, a superheat target value Ht defined as the superheat set value 154b and the superheat H are compared. When the superheat H is lower than the superheat target value Ht, processing proceeds to step S34 to increase the rotation rate of the motor 142a. The quantity of heat exchange at the evaporator 28 thus increases, and the superheat increases to be closer to the superheat target value Ht. When the superheat H is the same as the superheat target value Ht, processing proceeds to step S35 to maintain the rotation rate of the motor 142a. A state in which the superheat H and the superheat target value Ht are the same is thus maintained. When the superheat H is higher than the superheat target value Ht, processing proceeds to step S36 to decrease the rotation rate of the motor 142a. The quantity of heat exchange at the evaporator 28 thus decreases, and the superheat decreases to be closer to the superheat target value Ht.

After steps S34, S35, and S36, processing proceeds to step S37. In step S37, whether cooling is continued, for example, whether there is the power supply on-off command of the system 20 is determined. When it is determined that cooling is continued without ending, processing returns to step S31 to repeat the subsequent processing. When it is determined that cooling ends, the fourth processing ends.

By performing the above-mentioned fourth processing in the system 120, the flow rate is regulated using the internal cooling flow rate regulation device so that the refrigerant downstream of the evaporator 28 is superheated. A cooling cycle using the latent heat region can thus be established also at the evaporator 28, allowing for more efficient cooling.

When the moving vehicle 12 is the aircraft 12, the external environment greatly changes with propulsion thereof, so that cooling of the condenser 24 using the cooling air depending on the environment external to the moving vehicle 12 greatly varies. For example, the external environment can change in a range of 0.2 atmospheres to 1.0 atmosphere and in a range of -74 °C to 60 °C when the aircraft 12 is propelled through the air and when the aircraft 12 is on the ground, and the system 20 is to be operated in response to the environment. In such a case, performing the above-mentioned first processing in response to the environmental temperature and performing the second processing in parallel with the first processing are particularly effective because the efficient and stable cooling cycle can be established by effectively using the latent heat region at the condenser 24 regardless of the variation of the external environment.

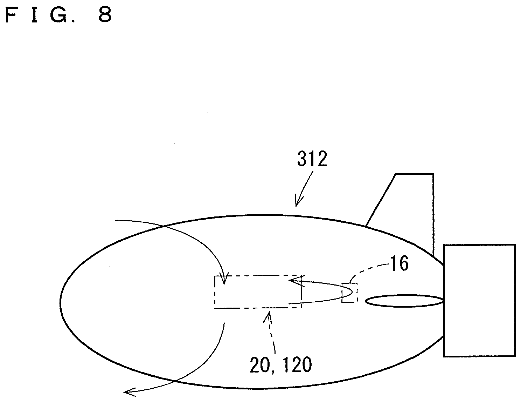

When the moving vehicle 12 is an underwater propulsion vehicle 312 as illustrated in FIG. 8, the underwater propulsion vehicle 312 is propelled underwater while being submerged. In this case, when the depth changes, a water temperature, water pressure, and the like greatly vary, so that a temperature of an outer shell of the underwater propulsion vehicle 312 subjected to the external environment greatly varies, and a temperature of a fluid flowing near the outer shell also greatly varies. When the condenser 24 is cooled using a liquid (seawater or water) as the fluid flowing near the outer shell, the variation of the external environment can have an effect on a temperature of the liquid (seawater or water) for cooling of the condenser 24. Thus, when the above-mentioned system 20 or 120 is mounted on the underwater propulsion vehicle 312, and the condenser 24 is cooled using the liquid (seawater or water) flowing near the outer shell, the efficient and stable cooling cycle can be established by effectively using the latent heat region at the condenser 24 regardless of the external environment (particularly, the temperature depending on the depth).

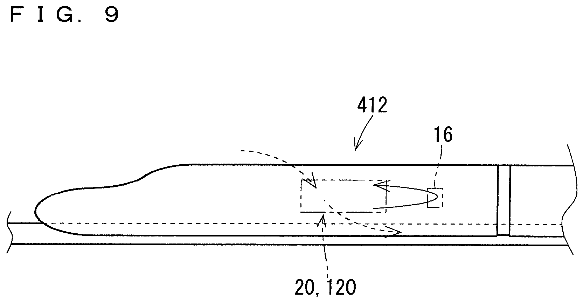

The moving vehicle 12 may be a railroad vehicle 412 as illustrated in FIG. 9, for example. When the railroad vehicle 412 is a high-speed railroad vehicle 412 that travels at a high speed (e.g., 400 km/h or more), such as a magnetically levitated railroad, for example, the total temperature can change due to an effect of a speed. A variation of the external environment due to travel can thus have an effect on a temperature of air for cooling of the condenser 24 taken from the outside. Thus, even when the above-mentioned system 20 or 120 is mounted on the railroad vehicle 412, the efficient and stable cooling cycle can be established by effectively using the latent heat region at the condenser 24 regardless of the speed of the railroad vehicle.

The moving vehicle 12 is not required to be the aircraft 12, the underwater propulsion vehicle 312, or the railroad vehicle 412 as described above. The moving vehicle 12 may be another vehicle, such as a straddle-type vehicle and an automobile.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

Configurations described in the above-mentioned embodiment and modification can be combined with each other as appropriate unless any contradiction occurs.

The foregoing description is in all aspects illustrative and not restrictive : the scope of the invention is only defined by the appended claims.

### EXPLANATION OF REFERENCE SIGNS

10 moving vehicle with cooling system
12 moving vehicle (aircraft)
20, 120 cooling system for moving vehicle
22 compressor
24 condenser
26 expansion valve
28 evaporator
30 flow regulation valve
31a motor
31b fan
34a motor
34b fan
40 first pressure sensor
41 second pressure sensor
42 temperature sensor
43 cooling temperature detection sensor
45 environmental temperature acquisition sensor
46 environmental temperature acquisition sensor
50, 150 controller
52 processor
54, 154 storage
54a, 154a program
54b target cooling temperature
54c pressure offset value
54d sub-cool set value
58 input
130 third pressure sensor
132 evaporator downstream refrigerant temperature sensor
140 flow regulation valve
142a motor
142b fan
154b superheat set value
312 underwater propulsion vehicle
412 railroad vehicle

## Claims

1. A cooling system (20;120) for a moving vehicle (12;312;412), the cooling system comprising:
a compressor (22) that compresses a refrigerant;
a condenser (24) that condenses the refrigerant compressed by the compressor;
an expansion valve (26) that expands the refrigerant condensed by the condenser;
an evaporator (28) that evaporates the refrigerant expanded by the expansion valve to cool a fluid in the moving vehicle;
a flow rate regulation device (30,31a,31b) that regulates a flow rate when a cooling fluid depending on an environment external to the moving vehicle is directed to the condenser;
an environmental temperature acquisition sensor (45,46) that detects an environmental condition to acquire an environmental temperature to which the condenser is subjected by the cooling fluid;
a pressure sensor (40,41) that detects pressure of the refrigerant at the condenser;
a temperature sensor (42) that detects a temperature of the refrigerant downstream of the condenser; and
a controller (50;150) that performs first processing and second processing, the first processing being processing to regulate, based on the environmental temperature based on an output from the environmental temperature acquisition sensor (45,46) and an output from the pressure sensor (40,41), the flow rate of the cooling fluid using the flow rate regulation device (30,31a,31b) so that the pressure of the refrigerant at the condenser (24) is higher than saturation pressure of the refrigerant at the environmental temperature, the second processing being processing to regulate, based on the output from the pressure sensor (40)
and an output from the temperature sensor (42), opening of the expansion valve (26) so that the refrigerant downstream of the condenser (24) is sub-cooled,
the controller (50;150) acquiring a total temperature for the moving vehicle (12) based on the output from the environmental temperature acquisition sensor (45,46), and performing the first processing with the acquired total temperature as the environmental temperature.

2. The cooling system for the moving vehicle according to claim 1, wherein
the pressure sensor includes a first pressure sensor (40) disposed upstream of the condenser (24) and a second pressure sensor (41) disposed downstream of the condenser (41), and an output from the first pressure sensor (40) is used in the first processing, and an output from the second pressure sensor (41) is used in the second processing.

3. The cooling system for the moving vehicle according to claim 1 or 2, wherein
the second processing is processing to acquire a saturation temperature corresponding to the pressure of the refrigerant at the condenser (24) based on the output from the pressure sensor (40,41), compare the saturation temperature and the temperature of the refrigerant downstream of the condenser (24) based on the output from the temperature sensor (42), and regulate, based on a result of comparison, the opening of the expansion valve (26) so that the refrigerant downstream of the condenser (24) is sub-cooled.

4. The cooling system for the moving vehicle according to any one of claims 1 to 3, the cooling system further comprising
a cooling temperature detection sensor (43) that detects a cooling temperature at the evaporator (28), wherein
the controller (50;150) performs third processing to control the compressor based on an output from the cooling temperature detection sensor (43) and a target cooling temperature.

5. The cooling system for the moving vehicle according to any one of claims 1 to 4, wherein
the flow rate regulation device (30,31a,31b) includes at least one of a flow rate regulation valve (30) that regulates the flow rate of the cooling fluid and/or a fan (31a) that delivers the cooling fluid.

6. The cooling system for the moving vehicle according to any one of claims 1 to 5, wherein
the controller (50;150) is physically configured as a single computer that performs the first processing and the second processing.

7. The cooling system for the moving vehicle according to any one of claims 1 to 6, the cooling system further comprising:
a third pressure sensor (130) that detects pressure of the refrigerant downstream of the evaporator;
an evaporator downstream refrigerant temperature sensor (132) that detects a temperature of the refrigerant downstream of the evaporator (28); and
an internal cooling flow rate regulation device (142a,142b) that regulates a flow rate when the fluid in the moving vehicle is directed to the evaporator, wherein
the controller (150) regulates, based on an output from the third pressure sensor (130) and an output from the evaporator downstream refrigerant temperature sensor (132), the flow rate of the fluid in the moving vehicle using the internal cooling flow rate regulation device (142a,142b) so that the refrigerant downstream of the evaporator is superheated.

8. The cooling system for the moving vehicle according to any one of claims 1 to 7, wherein
the moving vehicle is an aircraft (12), an underwater propulsion vehicle (312), or a railroad vehicle (412), the controller (50;150) being configured to acquire the total temperature for the moving vehicle and to perform the first processing with the acquired total temperature as the environmental temperature.

9. A moving vehicle (12;312;412) with a cooling system comprising:
the cooling system (20;120) according to any one of claims 1 to 7; and
a moving vehicle (12;312;412) that is movable with the cooling system for the moving vehicle being incorporated therein.

10. The moving vehicle with the cooling system according to claim 9, wherein
the moving vehicle is an aircraft (12), an underwater propulsion vehicle (312), or a railroad vehicle (412).

11. A cooling control method of controlling a cooling system in which a refrigerant circulates through a compressor (22), a condenser (24), an expansion valve (26), and an evaporator (28) in a moving vehicle (12:312;412) the cooling control method comprising:
acquiring a total temperature for the moving vehicle based on the output from an environmental temperature acquisition sensor (45,46); and
performing first processing to regulate, based on the acquired total temperature to which the condenser (24) is subjected and pressure of the refrigerant at the condenser (24), a flow rate of a cooling fluid directed to the condenser (24) so that the pressure of the refrigerant at the condenser (24) is higher than saturation pressure of the refrigerant at the environmental temperature; and
performing second processing to regulate, based on the pressure of the refrigerant at the condenser (24) and a temperature of the refrigerant downstream of the condenser (24), opening of the expansion valve (26) so that the refrigerant downstream of the condenser (24) is sub-cooled.

12. The cooling control method according to claim 12, wherein
the first processing is processing based on detected pressure of the refrigerant upstream of the condenser (24), and the second processing is processing based on detected pressure of the refrigerant downstream of the condenser (24).

13. The cooling control method according to claim 12 or 13, wherein
the second processing is processing to acquire a saturation temperature corresponding to the pressure of the refrigerant at the condenser (24), compare the saturation temperature and the temperature of the refrigerant downstream of the condenser (24), and regulate, based on a result of comparison, the opening of the expansion valve (26) so that the refrigerant downstream of the condenser (24) is sub-cooled.

14. The cooling control method according to any one of claims 12 to 14, further comprising
performing third processing to control the compressor (22) based on a cooling temperature at the evaporator (28) and a target cooling temperature.

## Patentansprüche

1. Kühlsystem (20; 120) für ein sich bewegendes Fahrzeug (12; 312; 412), wobei das Kühlsystem umfasst:
einen Kompressor (22), der ein Kältemittel komprimiert;
einen Kondensator (24), der das durch den Kompressor komprimierte Kältemittel kondensiert;
ein Expansionsventil (26), das das durch den Kondensator kondensierte Kältemittel expandiert;
einen Verdampfer (28), der das durch das Expansionsventil expandierte Kältemittel verdampft, um ein Fluid in dem sich bewegenden Fahrzeug zu kühlen;
eine Durchflussmengenregulierungsvorrichtung (30, 31a, 31b), die eine Durchflussmenge reguliert, wenn ein Kühlfluid in Abhängigkeit von einer Umgebung außerhalb des sich bewegenden Fahrzeugs dem Kondensator zugeführt wird;
einen Umgebungstemperaturerfassungssensor (45, 46), der einen Umgebungszustand erfasst, um eine Umgebungstemperatur, der der Kondensator durch das Kühlfluid ausgesetzt ist, zu erfassen;
einen Drucksensor (40, 41), der einen Druck des Kältemittels am Kondensator erfasst;
einen Temperatursensor (42), der eine Temperatur des Kältemittels stromabwärts des Kondensators erfasst; und
einen Controller (50; 150), der eine erste Verarbeitung und eine zweite Verarbeitung durchführt, wobei die erste Verarbeitung eine Verarbeitung zum Regeln der Durchflussmenge des Kühlfluids mittels der Durchflussmengenregulierungsvorrichtung (30, 31a, 31b) auf Basis der Umgebungstemperatur basierend auf einem Ausgang des Umgebungstemperaturerfassungssensors (45, 46) und einem Ausgang des Drucksensors (40, 41) ist, so dass der Druck des Kältemittels am Kondensator (24) höher ist als der Sättigungsdruck des Kältemittels bei der Umgebungstemperatur, und wobei die zweite Verarbeitung eine Verarbeitung zum Regeln der Öffnung des Expansionsventils (26) auf Basis des Ausgangs des Drucksensors (40) und eines Ausgangs des Temperatursensors (42) ist, so dass das Kältemittel stromabwärts des Kondensators (24) unterkühlt ist,
wobei der Controller (50; 150) eine Gesamttemperatur für das sich bewegende Fahrzeug (12) auf Basis des Ausgangs des Umgebungstemperaturerfassungssensors (45, 46) erfasst und die erste Verarbeitung mit der erfassten Gesamttemperatur als Umgebungstemperatur durchführt.

2. Kühlsystem für das sich bewegende Fahrzeug nach Anspruch 1, wobei
der Drucksensor einen ersten Drucksensor (40), der stromaufwärts des Kondensators (24) angeordnet ist, und einen zweiten Drucksensor (41), der stromabwärts des Kondensators (41) angeordnet ist, umfasst, und ein Ausgang des ersten Drucksensors (40) in der ersten Verarbeitung verwendet wird und ein Ausgang des zweiten Drucksensors (41) in der zweiten Verarbeitung verwendet wird.

3. Kühlsystem für das sich bewegende Fahrzeug nach Anspruch 1 oder 2, wobei
die zweite Verarbeitung eine Verarbeitung zum Erfassen einer Sättigungstemperatur ist, die dem Druck des Kältemittels an dem Kondensator (24) entspricht, auf Basis des Ausgangs des Drucksensors (40, 41), zum Vergleichen der Sättigungstemperatur und der Temperatur des Kältemittels stromabwärts des Kondensators (24) auf Basis des Ausgangs des Temperatursensors (42), und zum Regeln der Öffnung des Expansionsventils (26) auf Basis eines Vergleichsergebnisses, so dass das Kältemittel stromabwärts des Kondensators (24) unterkühlt ist.

4. Kühlsystem für das sich bewegende Fahrzeug nach einem der Ansprüche 1 bis 3, wobei das Kühlsystem ferner
einen Kühltemperaturerfassungssensor (43) umfasst, der eine Kühltemperatur an dem Verdampfer (28) erfasst, wobei
der Controller (50; 150) eine dritte Verarbeitung durchführt, um den Kompressor auf Basis eines Ausgangssignals des Kühltemperaturerfassungssensors (43) und einer Zielkühltemperatur zu steuern.

5. Kühlsystem für das sich bewegende Fahrzeug nach einem der Ansprüche 1 bis 4, wobei
die Durchflussmengenregulierungsvorrichtung (30, 31a, 31b) zumindest eines von Folgendem umfasst: ein Durchflussregulierungsventil (30), das den Durchfluss des Kühlmittels reguliert, und/oder ein Gebläse (31a), das das Kühlmittel fördert.

6. Kühlsystem für das sich bewegende Fahrzeug nach einem der Ansprüche 1 bis 5, wobei
der Controller (50; 150) physisch als ein einziger Computer konfiguriert ist, der die erste Verarbeitung und die zweite Verarbeitung durchführt.

7. Kühlsystem für das sich bewegende Fahrzeug nach einem der Ansprüche 1 bis 6, wobei das Kühlsystem ferner umfasst:
einen dritten Drucksensor (130), der den Druck des Kältemittels stromabwärts des Verdampfers erfasst;
einen Verdampfer-stromabwärts-Kältemitteltemperatursensor (132), der eine Temperatur des Kältemittels stromabwärts des Verdampfers (28) erfasst; und
eine interne Kühlflussmengenregulierungsvorrichtung (142a, 142b), die eine Durchflussmenge regelt, wenn das Fluid in dem sich bewegenden Fahrzeug zu dem Verdampfer geleitet wird, wobei
der Controller (150) die Durchflussmenge des Fluids in dem sich bewegenden Fahrzeug mittels der internen Kühlflussmengenregulierungsvorrichtung (142a, 142b) auf Basis eines Ausgangs des dritten Drucksensors (130) und eines Ausgangs des Verdampfer-stromabwärts-Kältemitteltemperatursensors (132) reguliert, so dass das Kältemittel stromabwärts des Verdampfers überhitzt ist.

8. Kühlsystem für das sich bewegende Fahrzeug nach einem der Ansprüche 1 bis 7, wobei
das sich bewegende Fahrzeug ein Flugzeug (12), ein Unterwasserantriebsfahrzeug (312) oder ein Schienenfahrzeug (412) ist, wobei der Controller (50; 150) eingerichtet ist, die Gesamttemperatur für das sich bewegende Fahrzeug zu erfassen und die erste Verarbeitung mit der erfassten Gesamttemperatur als Umgebungstemperatur durchzuführen.

9. Sich bewegendes Fahrzeug (12; 312; 412) mit einem Kühlsystem, umfassend:
das Kühlsystem (20; 120) nach einem der Ansprüche 1 bis 7; und
ein sich bewegendes Fahrzeug (12; 312; 412), das sich bewegen kann, wobei das Kühlsystem für das sich bewegende Fahrzeug darin eingebaut ist.

10. Sich bewegendes Fahrzeug mit dem Kühlsystem nach Anspruch 9, wobei
das sich bewegende Fahrzeug ein Flugzeug (12), ein Unterwasserfahrzeug (312) oder ein Schienenfahrzeug (412) ist.

11. Kühlsteuerungsverfahren zum Steuern eines Kühlsystems, in dem ein Kühlmittel durch einen Kompressor (22), einen Kondensator (24), ein Expansionsventil (26) und einen Verdampfer (28) in einem sich bewegenden Fahrzeug (12:312; 412) zirkuliert, wobei das Kühlsteuerungsverfahren umfasst:
Erfassen einer Gesamttemperatur für das sich bewegende Fahrzeug auf Basis eines Ausgangs eines Umgebungstemperaturerfassungssensor (45, 46); und
Durchführen einer ersten Verarbeitung zum Regeln einer Durchflussmenge eines dem Kondensator (24) zugeführten Kühlfluids auf Basis der erfassten Gesamttemperatur, der der Kondensator (24) ausgesetzt ist, und eines Drucks des Kältemittels am Kondensator (24), so dass der Druck des Kältemittels am Kondensator (24) höher ist als der Sättigungsdruck des Kältemittels bei der Umgebungstemperatur; und
Durchführen einer zweiten Verarbeitung zum Regeln einer Öffnung des Expansionsventils (26) auf Basis des Drucks des Kältemittels am Kondensator (24) und einer Temperatur des Kältemittels stromabwärts des Kondensators (24), so dass das Kältemittel stromabwärts des Kondensators (24) unterkühlt ist.

12. Kühlsteuerungsverfahren nach Anspruch 12, wobei
die erste Verarbeitung auf Basis des erfassten Drucks des Kältemittels stromaufwärts des Kondensators (24) erfolgt, und die zweite Verarbeitung auf Basis des erfassten Drucks des Kältemittels stromabwärts des Kondensators (24) erfolgt.

13. Kühlsteuerungsverfahren nach Anspruch 12 oder 13, wobei
die zweite Verarbeitung eine Verarbeitung ist, um eine Sättigungstemperatur zu erfassen, die dem Druck des Kältemittels am Kondensator (24) entspricht, die Sättigungstemperatur und die Temperatur des Kältemittels stromabwärts des Kondensators (24) zu vergleichen und auf Basis eines Vergleichsergebnisses die Öffnung des Expansionsventils (26) derart zu regulieren, dass das Kältemittel stromabwärts des Kondensators (24) unterkühlt ist.

14. Kühlsteuerungsverfahren nach einem der Ansprüche 12 bis 14, ferner umfassend
Durchführen einer dritten Verarbeitung zur Steuerung des Kompressors (22) auf Basis einer Kühltemperatur am Verdampfer (28) und einer Zielkühltemperatur.

## Revendications

1. Système de refroidissement (20 ; 120) pour un véhicule en mouvement (12 ; 312 ; 412), le système de refroidissement comprenant :
un compresseur (22) qui comprime un réfrigérant ;
un condenseur (24) qui condense le réfrigérant comprimé par le compresseur ;
une soupape de détente (26) qui détend le réfrigérant condensé par le condenseur ;
un évaporateur (28) qui évapore le réfrigérant détendu par la soupape de détente afin de refroidir un fluide dans le véhicule en mouvement ;
un dispositif de régulation du débit (30, 31a, 31b) qui régule un débit lorsqu'un fluide de refroidissement dépendant d'un environnement extérieur au véhicule en mouvement est dirigé vers le condenseur ;
un capteur d'acquisition de température ambiante (45, 46) qui détecte une condition environnementale afin d'acquérir une température ambiante à laquelle le condenseur est soumis par le fluide de refroidissement ;
un capteur de pression (40, 41) qui détecte la pression du réfrigérant au niveau du condenseur ;
un capteur de température (42) qui détecte une température du réfrigérant en aval du condenseur ; et
un dispositif de commande (50 ; 150) qui effectue un premier traitement et un deuxième traitement, le premier traitement étant un traitement visant à réguler, sur la base de la température ambiante basée sur une sortie du capteur d'acquisition de température ambiante (45, 46) et une sortie du capteur de pression (40, 41), le débit du fluide de refroidissement à l'aide du dispositif de régulation de débit (30, 31a, 31b) de manière à ce que la pression du réfrigérant au niveau du condenseur (24) soit supérieure à la pression de saturation du réfrigérant à la température ambiante, le deuxième traitement étant un traitement visant à réguler, sur la base de la sortie du capteur de pression (40) et d'une sortie du capteur de température (42), l'ouverture de la soupape de détente (26) de manière à ce que le réfrigérant en aval du condenseur (24) soit sous-refroidi,
le dispositif de commande (50 ; 150) acquérant une température totale pour le véhicule en mouvement (12) sur la base de la sortie du capteur d'acquisition de température ambiante (45, 46) et effectuant le premier traitement avec la température totale acquise comme température ambiante.

2. Système de refroidissement pour le véhicule en mouvement selon la revendication 1, dans lequel
le capteur de pression comprend un premier capteur de pression (40) disposé en amont du condenseur (24) et un deuxième capteur de pression (41) disposé en aval du condenseur (41), et une sortie du premier capteur de pression (40) est utilisée dans le premier traitement, et une sortie du deuxième capteur de pression (41) est utilisée dans le deuxième traitement.

3. Système de refroidissement pour le véhicule en mouvement selon la revendication 1 ou 2, dans lequel
le deuxième traitement est un traitement pour acquérir une température de saturation correspondant à la pression du réfrigérant au niveau du condenseur (24) sur la base de la sortie du capteur de pression (40, 41), comparer la température de saturation et la température du réfrigérant en aval du condenseur (24) sur la base de la sortie du capteur de température (42), et réguler, sur la base d'un résultat de comparaison, l'ouverture de la soupape de détente (26) de manière à ce que le réfrigérant en aval du condenseur (24) soit sous-refroidi.

4. Système de refroidissement pour le véhicule en mouvement selon l'une quelconque des revendications 1 à 3, le système de refroidissement comprenant en outre
un capteur de détection de température de refroidissement (43) qui détecte une température de refroidissement au niveau de l'évaporateur (28), dans lequel
le dispositif de commande (50 ; 150) effectue un troisième traitement pour commander le compresseur sur la base d'une sortie du capteur de détection de température de refroidissement (43) et d'une température de refroidissement cible.

5. Système de refroidissement pour le véhicule en mouvement selon l'une quelconque des revendications 1 à 4, dans lequel
le dispositif de régulation de débit (30, 31a, 31b) comprend au moins l'un parmi une soupape de régulation du débit (30) qui régule le débit du fluide de refroidissement et/ou un ventilateur (31a) qui délivre le fluide de refroidissement.

6. Système de refroidissement pour le véhicule en mouvement selon l'une quelconque des revendications 1 à 5, dans lequel
le dispositif de commande (50 ; 150) est physiquement configuré comme un seul ordinateur qui effectue le premier traitement et le deuxième traitement.

7. Système de refroidissement pour le véhicule en mouvement selon l'une quelconque des revendications 1 à 6, le système de refroidissement comprenant en outre :
un troisième capteur de pression (130) qui détecte la pression du réfrigérant en aval de l'évaporateur ;
un capteur de température (132) de réfrigérant en aval de l'évaporateur qui détecte une température du réfrigérant en aval de l'évaporateur (28) ; et
un dispositif de régulation de débit de refroidissement interne (142a, 142b) qui régule un débit lorsque le fluide dans le véhicule en mouvement est dirigé vers l'évaporateur, dans lequel
le dispositif de commande (150) régule, sur la base d'une sortie du troisième capteur de pression (130) et d'une sortie du capteur de température (132) de réfrigérant en aval de l'évaporateur, le débit du fluide dans le véhicule en mouvement à l'aide du dispositif de régulation de débit de refroidissement interne (142a, 142b) de manière à ce que le réfrigérant en aval de l'évaporateur soit surchauffé.

8. Système de refroidissement pour le véhicule en mouvement selon l'une quelconque des revendications 1 à 7, dans lequel
le véhicule en mouvement est un aéronef (12), un véhicule à propulsion sous-marine (312) ou un véhicule ferroviaire (412), le dispositif de commande (50 ; 150) étant configuré pour acquérir la température totale du véhicule en mouvement et pour effectuer le premier traitement avec la température totale acquise en tant que la température ambiante.

9. Véhicule en mouvement (12 ; 312 ; 412) avec un système de refroidissement, comprenant :
le système de refroidissement (20 ; 120) selon l'une quelconque des revendications 1 à 7 ; et
un véhicule en mouvement (12 ; 312 ; 412) qui est mobile avec le système de refroidissement pour le véhicule en mouvement qui y est incorporé.

10. Véhicule en mouvement équipé du système de refroidissement selon la revendication 9, dans lequel
le véhicule en mouvement est un aéronef (12), un véhicule à propulsion sous-marin (312) ou un véhicule ferroviaire (412).

11. Procédé de commande de refroidissement pour commander un système de refroidissement dans lequel un réfrigérant circule à travers un compresseur (22), un condenseur (24), une soupape de détente (26) et un évaporateur (28) dans un véhicule en mouvement (12 ; 312 ; 412), le procédé de commande de refroidissement comprenant :
l'acquisition d'une température totale pour le véhicule en mouvement sur la base de la sortie d'un capteur d'acquisition de température ambiante (45, 46) ; et
la réalisation d'un premier traitement pour réguler, sur la base de la température totale acquise à laquelle le condenseur (24) est soumis et de la pression du réfrigérant au niveau du condenseur (24), un débit d'un fluide de refroidissement dirigé vers le condenseur (24) de telle sorte que la pression du réfrigérant au niveau du condenseur (24) soit supérieure à la pression de saturation du réfrigérant à la température ambiante ; et
la réalisation d'un deuxième traitement pour réguler, en fonction de la pression du réfrigérant au niveau du condenseur (24) et d'une température du réfrigérant en aval du condenseur (24), l'ouverture de la soupape de détente (26) de manière à ce que le réfrigérant en aval du condenseur (24) soit sous-refroidi.

12. Procédé de commande de refroidissement selon la revendication 12, dans lequel
le premier traitement est un traitement basé sur la pression détectée du réfrigérant en amont du condenseur (24), et le deuxième traitement est un traitement basé sur la pression détectée du réfrigérant en aval du condenseur (24).

13. Procédé de commande de refroidissement selon la revendication 12 ou 13, dans lequel
le deuxième traitement est un traitement pour acquérir une température de saturation correspondant à la pression du réfrigérant au niveau du condenseur (24), comparer la température de saturation et la température du réfrigérant en aval du condenseur (24), et réguler, sur la base d'un résultat de comparaison, l'ouverture de la soupape de détente (26) de manière à ce que le réfrigérant en aval du condenseur (24) soit sous-refroidi.

14. Procédé de commande de refroidissement selon l'une quelconque des revendications 12 à 14, comprenant en outre
la réalisation d'un troisième traitement pour commander le compresseur (22) sur la base d'une température de refroidissement au niveau de l'évaporateur (28) et d'une température de refroidissement cible.
